# EUROPÄISCHE PATENTANMELDUNG

(11) **EP 2 253 890 A2**
(43) Veröffentlichungstag der Anmeldung: **24.11.2010**
(21) Anmeldenummer: 10004971.7
(22) Anmeldetag: 11.05.2010
(51) Int. Cl.: F24D 3/14

(54) **Aufbau einer Flächenheizung, insbesondere einer Fußbodenheizung für ein Gebäude**

(30) Priorität: 13.05.2009 EP 09006442
(71) Anmelder: Feist, Artus, 53424 Remagen (DE)
(72) Erfinder: Feist, Artus, 53424 Remagen (DE)
(74) Vertreter: Walther, Walther & Hinz GbR

(57) **Zusammenfassung**

Gegenstand der Erfindung ist der Aufbau einer Flächenheizung, insbesondere einer Fußbodenheizung für ein Gebäude, mit mindestens einem auf dem Untergrund (1) mäanderförmig verlegten Heizrohr (5), wobei der Aufbau eine Mehrzahl von Deckplatten (20) über dem Heizrohr umfasst, wobei der Raum unter den Deckplatten (20) eine aushärtbare Vergussmasse aufweist, wobei die Deckplatten (20) unmittelbar oder mittelbar durch Überlappung mittels plattenförmiger Kuppelelemente (30) miteinander in Verbindung stehen, wobei die Deckplatten (20) und die Kupplungsplatten (30) Bohrungen (22, 24) aufweisen, wobei eine Anzahl von Bohrungen jeweils mindestens einen von der Oberfläche der Deckplatte (20) abstehenden Vorsprung (25) aufweisen, der in Eingriff mit einer entsprechenden Bohrung (24) der darunter befindlichen Deckplatte (20) oder des plattenförmigen Kuppelelements (30) steht, wobei durch die Bohrungen (22, 24) ebenfalls die aushärtbare Vergussmasse in den Raum unter den Deckplatten (20), aber oberhalb des Untergrundes (1) eingebracht wird.

## Beschreibung

Die vorliegende Erfindung betrifft den Aufbau einer Flächenheizung, insbesondere einer Fußbodenheizung für ein Gebäude, mit mindestens einem auf dem Untergrund mäanderförmig verlegten Heizrohr.

Flächenheizungen, und hier insbesondere Fußbodenheizungen sind seit Langem bekannt. So ist beispielsweise aus der EP 1 512 915 A2 ein Fußbodenheizungsaufbau bekannt, bei dem zwischen zwei mit Öffnungen versehenen Deckplatten Rohrschlangen verlegt sind. Zwischen den einzelnen Rohrschlangen und auch zwischen den Deckplatten befindet sich ein Trägermaterial, beispielsweise aus einem Leichtbaustoff, der z. B. als Wabenmaterial ausgebildet ist. Die Verbindung der Deckplatten mit dem Trägermaterial erfolgt durch jeweilige Klebeschichten. Nachteilig an dem Aufbau dieser bekannten Fußbodenheizung ist, dass die Stabilität bei Verlegen einzelner Fußbodenheizungsplatten im Aufbau, wie aus der EP 1 512 915 A2 bekannt, nicht hinreichend ist. Denn es ist davon auszugehen, dass sich die Platten gegeneinander bewegen werden, was insbesondere dann von Nachteil ist, wenn beispielsweise in Altbauten auf Holzböden, die immer uneben sind, derartige Platten verlegt werden sollen. Eine Ebene im Sinne eines ebenen Bodens ist mit einem solchen Aufbau einzelner Heizplatten nicht möglich. Dies selbst dann, wenn die einzelnen Platten verrastend miteinander verbunden sind.

Ein ähnlicher Aufbau ist aus der US 4,301,859 bekannt, wobei hier ein Fußbodenplattenelement gezeigt ist, bei dem zwischen zwei Platten eine Heizschlange verlegt ist. Aus Stabilitätsgründen befindet sich zwischen den einzelnen Platten zur Armierung eine Gewebeschicht. Für die Verbindung der einzelnen plattenförmigen Heizungselemente ist entweder eine Art Nut- und Federverbindung vorgesehen, oder aber die einzelnen plattenförmigen Elemente weisen umlaufend an der Kante einen Versatz zwischen der oberen und der unteren Platte auf mit der Folge, dass die plattenförmigen Elemente im Bereich des Randes einander überlappend verlegt werden können. Zur Verbindung der plattenförmigen Elemente sind dann beispielsweise Schrauben vorgesehen. Nachteilig auch hierbei ist, dass die einzelnen plattenförmigen Elemente bei entsprechender Belastung bei Auflage auf unebenem Untergrund sich relativ zueinander bewegen.

Ein Fußbodenaufbau, der nicht aus einzelnen Elementen besteht, die bei Auflage auf einen Untergrund zusammengesteckt werden, ist aus der DE 20 2006 015 397 U1 bekannt. Der aus dieser Gebrauchsmusterschrift bekannte Fußbodenaufbau zeichnet sich dadurch aus, dass auf einem Untergrund zunächst ein plattenförmiges Bauteil aufgelegt wird, in das das Heizrohr einer Fußbodenheizung eingelegt ist. Über dem plattenförmigen Bauteil befindet sich eine Anzahl von weiteren Schichten, so insbesondere einer Entkopplungsmatte erheblicher Stärke, wobei auf der Entkopplungsmatte eine Verfüllmasse zum Aufkleben beispielsweise von Fliesen vorgesehen ist. Die Höhe eines solchen Fußbodenaufbaues ist nicht unerheblich. Darüber hinaus ist die Entkopplungsmatte ein fließartiges Gebilde und wirkt insofern naturgemäß isolierend.

Die der Erfindung zugrunde liegende Aufgabe besteht nun darin, einen Aufbau einer Flächenheizung, und hier insbesondere einer Fußbodenheizung bereitzustellen, der äußerst flach baut und der darüber hinaus hervorragende Wärmeübergangswerte bereitstellt.

Der Aufbau einer Flächenheizung, insbesondere einer Fußbodenheizung für ein Gebäude mit mindestens einem auf dem Untergrund mäanderförmig verlegten Heizrohr zeichnet sich erfindungsgemäß durch folgende Merkmale aus:

Über dem mäanderförmig verlegten Heizrohr befindet sich eine Mehrzahl von Deckplatten, wobei der Raum zwischen dem Untergrund und den Deckplatten eine aushärtbare Vergussmasse aufweist,
die Deckplatten stehen unmittelbar durch Überlappung oder mittelbar durch Überlappung mit plattenförmigen Kuppelelementen miteinander in Verbindung stehen,
die Deckplatten und die Kuppelelemente weisen Bohrungen auf,
wobei eine Anzahl von Bohrungen jeweils mindestens einen von der Oberfläche der Deckplatten abstehenden Vorsprung aufweist, der in Eingriff mit einer entsprechenden Bohrung der darunter befindlichen Deckplatte oder des plattenförmigen Kuppelelementes steht,
wobei die Vergussmasse durch die Bohrungen in den Deckplatten und/oder den plattenförmigen Kuppelelementen in den Raum zwischen den Deckplatten einerseits und dem Untergrund andererseits einbringbar ist.

Der Kern der Erfindung besteht darin, die Verlegung der Deckplatten, beispielsweise in einer Größe vom 45 cm x 45 cm, die insbesondere aus einem Metall, insbesondere einem wärmeleitfähigen Metall, ausgebildet sind, auf einer größeren Fläche zu erleichtern. Hierzu dienen die auf der im verlegten Zustand Unterseite der Deckplatten angeordneten Vorsprünge im Bereich der Bohrungen. Diese Vorsprünge sind derart ausgebildet, dass sie bei überlappter Verlegung der Deckplatten zueinander in die entsprechenden Bohrungen der überlappten Deckplatte eingreifen. Nach einer anderen Variante ist vorgesehen, dass die Deckplatten einander nicht unmittelbar überlappen, sondern vielmehr plattenförmige Kuppelelemente zwischen den einzelnen nebeneinander angeordneten Deckplatten vorgesehen sind, die die Verbindung zwischen den einzelnen Deckplatten herstellen. Das heißt, auch diese Kuppelelemente weisen entsprechend der Bohrungen in den Deckplatten Bohrungen auf, sodass auch in die Bohrungen eines solchen plattenförmigen Kuppelelements die Vorsprünge der darüber befindlichen Deckplatte eingreifen können. Insofern sind die einzelnen Deckplatten durch die Vorsprünge an den Bohrungen in jedem Fall verrastend miteinander verlegt. Dies vereinfacht die Verlegung der Deckplatten in der Ebene erheblich, da die Deckplatten insofern relativ zueinander fixiert sind. Hieraus wird deutlich, dass die Deckplatten nebeneinander liegend durch Kuppelelemente verbunden sind, oder einander im Randbereich überlappend eine Ebene in einem Raum abdecken.

In diesem Zusammenhang ist nach einem Merkmal der Erfindung vorgesehen, dass die Deckplatten und die plattenförmigen Kuppelelemente Reihen von Bohrungen unterschiedlichen Durchmessers aufweisen, wobei eine Anzahl von Bohrungen kleineren Durchmessers den Vorsprung aufweisen. Der Vorsprung umgibt hierbei vorzugsweise kranzförmig die Bohrung zumindest partiell. In diesem Zusammenhang ist vorgesehen, dass der Außendurchmesser des kranzartigen Vorsprunges in etwa dem Bohrungsdurchmesser der größeren Bohrung entspricht. Insbesondere in Verbindung mit dem weiteren Merkmal, wonach die Reihen von Bohrungen unterschiedlichen Durchmessers abwechselnd und versetzt zueinander in der Deckplatte und/oder dem plattenförmigen Kuppelelement angeordnet sind, ergibt sich somit die Möglichkeit, die einzelnen Deckplatten entweder unmittelbar überlappend zu verlegen, oder mittelbar durch die bereits zuvor beschriebenen Kuppelelemente.

Nach einem besonderen Merkmal der Erfindung ist des Weiteren vorgesehen, dass zwischen dem mäanderförmig verlegten Heizrohr Platten aus isolierendem Werkstoff, insbesondere einem Hartschaumstoff z. B. Polystyrol, verlegt sind, wobei diese Platten nicht nur eine isolierende Wirkung ausüben, sondern gleichzeitig auch der Druckverteilung dienen. Die Höhe dieser Platten aus isolierendem Werkstoff entspricht in etwa der Höhe dem auf dem Untergrund verlegten Heizrohr bzw. steht leicht über dem Heizrohr über, sodass bei überlappender Verlegung der Deckplatten sich die Vorsprünge in die zwischen dem Heizrohr verlegten Platten aus isolierendem Werkstoff, z. B. Polystyrol, einstanzen. Das heißt, es entsteht hierbei ein Verbund an Deckplatten, bei dem die einzelnen Deckplatten zum einen relativ zueinander und zum anderen auf den Platten aus z. B. Polystrol fixiert sind, d. h., dass sich die Deckplatten nicht bewegen können. Dies gilt entsprechend bei der Verlegung von Deckplatten, die durch plattenförmige Kuppelelemente aufeinander in Verbindung stehen. Auch hier können die kleineren Bohrungen in Richtung der Polystyrolplatten auskragende Vorsprünge aufweisen.

Zusätzlich kann nach einem vorteilhaften Merkmal vorgesehen sein, dass die Deckplatten und/oder die plattenförmigen Kuppelelemente mit den Platten aus isolierendem Werkstoff verbunden, insbesondere verschraubt sind. Hierzu sind insbesondere Schrauben mit einem Gewindedurchmesser vorgesehen, der in etwa ¾ des Durchmessers des Schraubenkopfes beträgt. Das heißt, dass das Gewinde der Schraube einen gegenüber dem Kopf verhältnismäßig großen Durchmesser aufweist, was dafür sorgt, dass die Platten gegen Abheben bei einer Schraubverbindung mit der darunter befindlichen Hartschaumplatte z. B. der Polystyrolplatte gesichert sind. Insbesondere die großen Bohrungen in den Deckplatten sind mit einer Senkung versehen, um bei Verwendung von Senkkopfschrauben sicherzustellen, dass die Schrauben nicht über die Oberseite der Deckplatten überstehen, mithin sich eine ebene Oberfläche ergibt.

Um zu verhindern, dass das Heizrohr seine Wärme nicht nach unten, d. h. in Richtung auf den Untergrund zu abstrahlt, ist nach einem weiteren Merkmal der Erfindung vorgesehen, dass auf dem Untergrund unter dem Heizrohr eine wärmeisolierende Folie, z. B. eine Schaumfolie, angeordnet ist.

Anhand der Zeichnungen wird die Erfindung nachstehend beispielhaft näher erläutert.
- Figur 1: zeigt eine schematische perspektivische Darstellung des Aufbaues einer Fußbodenheizung, wobei die Deckplatten im abgenommenen Zustand dargestellt sind;
- Figur 2: zeigt einen Schnitt durch den Aufbau einer Fußbodenheizung gemäß Figur 1;
- Figur 3: zeigt zwei Deckplatten, die durch ein Kuppelelement miteinander in Verbindung stehen.

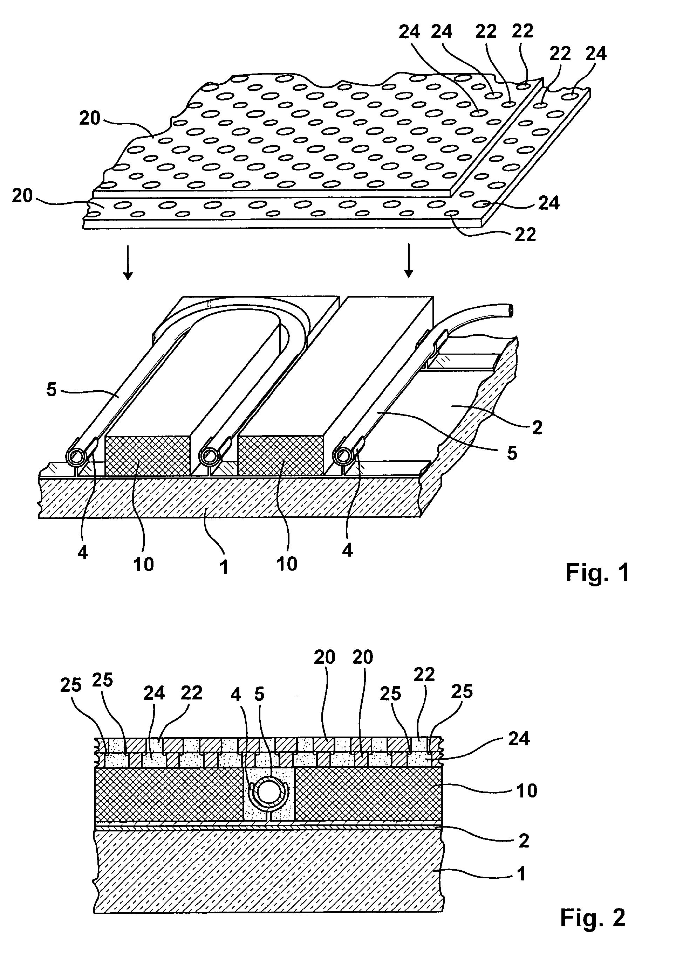

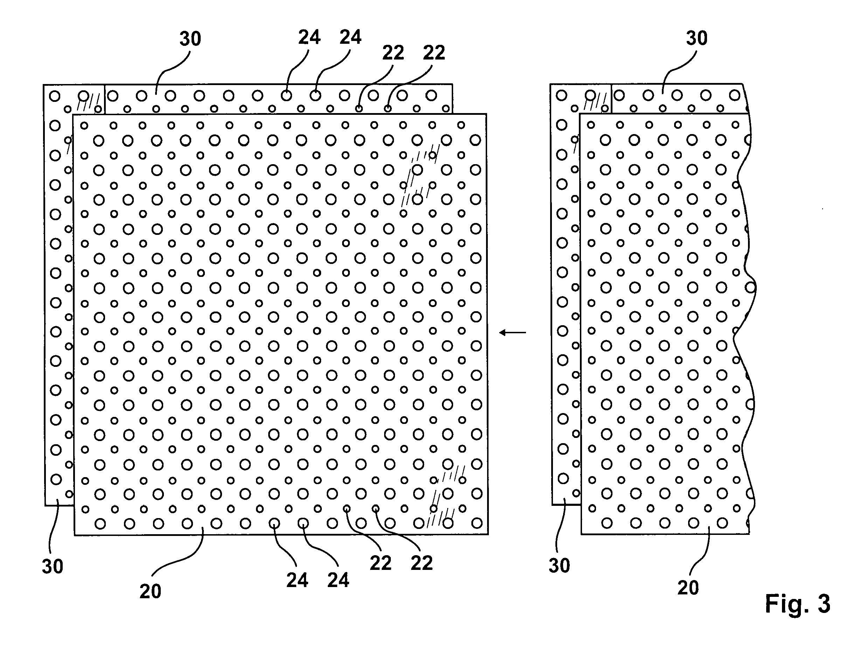

Aus Figur 1, wie ausgeführt, ist schematisch der Fußbodenaufbau in perspektivischer Darstellung erkennbar. So ist der Untergrund mit 1 bezeichnet beispielsweise eine Rohbetondecke. Auf der Rohbetondecke 1 befindet sich eine Folie 2, die nach unten hin wärmeisolierend ausgebildet ist. Auf der Folie 2 befinden sich Halter 4 zur clipsbaren Aufnahme des Heizrohres 5. Denkbar ist auch die Verwendung von Schienen, die die Heizrohre clipsbar aufnehmen. Erkennbar ist, dass das Heizrohr mäanderförmig verlegt ist. Zwischen den einzelnen mäanderförmig verlegten Heizrohren befinden sich Platten 10 aus isolierendem Werkstoff, beispielsweise Polystyrol. Erkennbar ist, dass der Zwischenraum zwischen den mäanderförmig verlegten Heizschlangen des Heizrohres 5 im Wesentlichen durch die Platten ausgefüllt ist. Über die Heizrohre und die Platten aus Polystyrol werden Deckplatten gelegt. Die Deckplatten zur Abdeckung der Heizrohre sind mit 20 bezeichnet. Die Deckplatten werden einander überlappend auf die Platten aus Polystyrol aufgelegt, d. h., sie sind entweder unmittelbar miteinander verbunden oder aber die Deckplatten sind durch plattenförmige Kuppelelemente 30 (Figur 3) miteinander verbunden, wobei die Kuppelelemente auf der Unterseite der Deckplatte durch Punktschweißung verbunden sind. Jede Deckplatte weist solche Kuppelelemente an zwei aneinander anstoßenden Seiten auf. Wesentlich bei der Ausbildung der Deckplatten und entsprechend auch bei der Ausbildung der plattenförmigen Kuppelelemente ist, dass sowohl die plattenförmigen Kuppelelemente als auch die Deckplatten Reihen von Bohrungen mit Bohrungen unterschiedlicher Größe aufweisen, wobei die Bohrungen der jeweiligen Reihe versetzt zu den Bohrungen der anderen Reihe sind, und zwar genau um die Hälfte des Abstandes zwischen den Bohrungen. Wie sich insbesondere aus Figur 2 entnehmen lässt, weisen die kleineren Bohrungen über die Oberfläche überstehende Vorsprünge, insbesondere kranzartige Vorsprünge 25 auf. Diese kranzartigen Vorsprünge 25 der kleineren Bohrung 22 greifen in die größere Bohrung 24 der darunter befindlichen Platte 20 ein. Hierdurch sind die Platten relativ zueinander fixiert. Solche kranzartigen Vorsprünge 25 weisen auch die Bohrungen 22 der plattenförmigen Kuppelelemente 30 auf, die sich in die Polystyrol-Platten 10 eindrücken.

Durch die Bohrungen, und hier insbesondere durch die größeren Bohrungen der Platten und/oder der Kuppelelemente 30, können Schrauben 11 eingedreht werden, um die Platten abhebsicher auf den Platten 10 aus Polystyrol fixieren zu können. Die Platten aus Polystyrol besitzen ein Raumgewicht zwischen 50 und 70 kg/m³; sie sind somit sehr dicht und insofern nicht nur in der Lage, Schrauben sicher zu halten, sondern sind nicht nur in der Lage, die in Gebäuden üblichen Verkehrslasten aufzunehmen. Die Schrauben sind insbesondere derart ausgebildet, dass der Schraubenschaft einen relativ gesehen großen Durchmesser gegenüber dem Schraubenkopf aufweist, wobei insbesondere der Schraubenschaft etwa ¾ des Durchmessers des Schraubenkopfes ausmacht. Hierdurch wird erreicht, dass eine solche Schraube auch in solchen Platten aus Polystyrol eine ausreichende Haltekraft bereitstellt. Sind die Deckplatten 20 aufgelegt, so kann durch die Bohrungen 22, 24 das zunächst flüssige, pastöse Vergussmaterial in den Raum unterhalb der Platten eingebracht werden, wobei festzustellen ist, dass dieses Vergussmaterial nach dem Einbringen aushärtet. Es handelt sich hierbei insbesondere um ein Kunstharz gebundenes Vergussmaterial, wobei als Zuschlagsstoff Sand oder Quarzmehl eingesetzt wird. Die Verfüllung mit Vergussmaterial erfolgt so lange, bis das Vergussmaterial auf der Oberseite der Bohrungen wieder austritt.

Bei der Darstellung gemäß Figur 3 sind die einzelnen Deckplatten nicht unmittelbar durch Überlappung miteinander verbunden, sondern mittelbar durch die plattenförmigen Kuppelelemente 30. Die Anordnung der Bohrungen 22 und 24 in den plattenförmigen Kuppelelementen ist genauso getroffen, wie bei den Deckplatten 20. Insofern gibt es auch hier Reihen kleiner und Reihen großer Bohrungen, die abwechselnd und versetzt zueinander in dem plattenförmigen Kuppelelement 30 angeordnet sind. Auch bei den Kuppelelementen weisen die kleineren Bohrungen 22 zumindest partiell die kranzartigen Vorsprünge 25 auf, gleich wie bei den Bohrungen der Deckplatten.

## Patentansprüche

1. Aufbau einer Flächenheizung, insbesondere einer Fußbodenheizung für ein Gebäude, mit mindestens einem auf dem Untergrund (1) mäanderförmig verlegten Heizrohr (5), wobei der Aufbau eine Mehrzahl von Deckplatten (20) über dem Heizrohr umfasst, wobei der Raum unter den Deckplatten (20) eine aushärtbare Vergussmasse aufweist, wobei die Deckplatten (20) unmittelbar oder mittelbar durch Überlappung mittels plattenförmiger Kuppelelemente (30) miteinander in Verbindung stehen, wobei die Deckplatten (20) und die Kupplungsplatten (30) Bohrungen (22, 24) aufweisen, wobei eine Anzahl von Bohrungen jeweils mindestens einen von der Oberfläche der Deckplatte (20) abstehenden Vorsprung (25) aufweisen, der in Eingriff mit einer entsprechenden Bohrung (24) der darunter befindlichen Deckplatte (20) oder des plattenförmigen Kuppelelements (30) steht, wobei durch die Bohrungen (22, 24) ebenfalls die aushärtbare Vergussmasse in den Raum unter den Deckplatten (20), aber oberhalb des Untergrundes (1) eingebracht wird.

2. Aufbau einer Flächenheizung, insbesondere einer Fußbodenheizung für ein Gebäude nach Anspruch 1,
**dadurch gekennzeichnet,**
**dass** die Deckplatten (20) und die plattenförmigen Kuppelelemente (30) Reihen von Bohrungen (22, 24) unterschiedlichen Durchmessers aufweisen, wobei die Bohrungen kleineren Durchmessers (22) den Vorsprung (25) aufweisen.

3. Aufbau einer Flächenheizung, insbesondere einer Fußbodenheizung für ein Gebäude nach einem der voranstehenden Ansprüche,
**dadurch gekennzeichnet,**
**dass** der Vorsprung (25) kranzartig die Bohrung (22) zumindest partiell umgibt.

4. Aufbau einer Flächenheizung, insbesondere einer Fußbodenheizung für ein Gebäude nach einem der voranstehenden Ansprüche,
**dadurch gekennzeichnet,**
**dass** der Außendurchmesser des kranzartigen Vorsprungs (25) in etwa dem Bohrungsdurchmesser der größeren Bohrung (24) entspricht.

5. Aufbau einer Flächenheizung, insbesondere einer Fußbodenheizung für ein Gebäude nach einem der voranstehenden Ansprüche,
**dadurch gekennzeichnet,**
**dass** zwischen dem mäanderförmig verlegten Heizrohr (5) Platten (10) aus isolierendem und druckfestem Werkstoff, z. B. Hartschaumstoff, verlegt sind.

6. Aufbau einer Flächenheizung, insbesondere einer Fußbodenheizung für ein Gebäude nach Anspruch 5,
**dadurch gekennzeichnet,**
**dass** die Deckplatten (20) und/oder die plattenförmigen Kuppelelemente (30) mit dem Platten (10) aus isolierendem Werkstoff verbunden, insbesondere verschraubt sind.

7. Aufbau einer Flächenheizung, insbesondere einer Fußbodenheizung für ein Gebäude nach Anspruch 6,
**dadurch gekennzeichnet,**
**dass** die Schrauben (11) einen Gewindedurchmesser aufweisen, der in etwa ¾ des Durchmessers des Schraubenkopfes beträgt.

8. Aufbau einer Flächenheizung, insbesondere einer Fußbodenheizung für ein Gebäude nach einem der voranstehenden Ansprüche,
**dadurch gekennzeichnet,**
**dass** die Deckplatten (20) und die Kuppelplatten (30) aus Metall ausgebildet sind.

9. Aufbau einer Flächenheizung, insbesondere einer Fußbodenheizung für ein Gebäude nach einem der voranstehenden Ansprüche,
**dadurch gekennzeichnet,**
**dass** die größeren Bohrungen (24) eine Senkung zur oberflächenbündigen Aufnahme von Senkkopfschrauben aufweisen.

10. Aufbau einer Flächenheizung, insbesondere einer Fußbodenheizung für ein Gebäude nach einem der voranstehenden Ansprüche,
**dadurch gekennzeichnet,**
**dass** die Reihen von Bohrungen (22, 24) unterschiedlichen Durchmessers um den hälftigen Abstand versetzt zueinander in der Deckplatte (20) und/oder dem plattenförmigen Kuppelelement (30) angeordnet sind.

11. Aufbau einer Flächenheizung, insbesondere einer Fußbodenheizung für ein Gebäude nach einem der voranstehenden Ansprüche,
**dadurch gekennzeichnet,**
**dass** auf dem Untergrund (1) unter dem Heizrohr (5) eine wärmeisolierende Folie (2), z. B. eine Schaumfolie, angeordnet ist.
